# FASCICULE DE BREVET EUROPEEN

(11) **EP 0 786 685 B1**
(45) Date de publication et mention de la délivrance du brevet: **09.04.2003**
(21) Numéro de dépôt: 97100589.7
(22) Date de dépôt: 16.01.1997
(51) Int. Cl.: G02F 1/1335, G09F 23/16, G09F 9/35, G04B 45/00

(54) **Dispositif d'affichage d'un décor et pièce d'horlogerie le comprenant**
Verzierung anzeigende Vorrichtung und diese enthaltende Uhr
Decoration displaying device and timepiece comprising the same

(30) Priorité: 23.01.1996 FR 9600741
(43) Date de publication de la demande: 30.07.1997
(73) Titulaire: The Swatch Group Management Services AG, 2501 Biel (CH)
(72) Inventeur: Grupp, Joachim, 2003 Neuchâtel (CH); Terés, Yvan, 2088 Cressier (CH); Poli, Jean-Charles, 2206 Les Geneveys-sur-Coffrane (CH)
(74) Mandataire: Thérond, Gérard Raymond

(56) Documents cités:
- EP-A- 0 625 721
- GB-A- 2 242 052
- US-A- 5 153 760

## Description

La présente invention concerne un dispositif d'affichage procurant un effet esthétique au moyen d'une valve optique, à effet de champ ou à effet de charge, permettant de découvrir ou de masquer un motif décoratif coloré placé contre sa face arrière, sans apport d'énergie autre que celle nécessaire au changement d'état de ladite valve optique.

L'invention concerne également une pièce d'horlogerie, telle qu'une montre, un réveil ou une pendule, dont tout ou partie du cadran comporte un tel dispositif d'affichage commandé par la commutation d'une source de courant, en fonction d'un signal déclenché par l'actionnement d'un organe de commande extérieur, ou par un signal reçu de la base de temps de ladite pièce d'horlogerie.

On connaît déjà certains dispositifs permettant d'afficher sur le cadran d'une pièce d'horlogerie un motif décoratif qui ne soit pas visible en permanence. Beaucoup de ces dispositifs comportent des disques décorés transparents, le plus souvent entraînés par le mouvement de la pièce d'horlogerie.

Par exemple, le brevet US-3 763 648 décrit une montre dans laquelle un disque transparent entraîné par l'aiguille des secondes comporte des motifs destinés à coopérer avec d'autres motifs portés par la glace pour former un décor.

On peut également découvrir ou masquer un décor porté par le cadran d'une pièce d'horlogerie au moyen d'un organe de commande indépendant de la marche de la pièce d'horlogerie elle-même. Ainsi, dans le brevet CH 465 507, un système optique composé de deux disques polarisés superposés est placé entre un décor porté par le cadran et la glace de la pièce d'horlogerie. La rotation manuelle de l'un des disques permet de découvrir ou de masquer un décor.

Dans tous ces dispositifs, on observera, soit que le motif décoratif persiste partiellement, soit qu'il est nécessaire d'ajouter des accessoires de manoeuvre, en modifiant par là-même l'aspect extérieur usuel de la pièce d'horlogerie.

L'utilisation d'une valve optique, plus précisément d'une cellule à cristal liquide, et d'une diapositive projetée ou éclairée est décrite dans le brevet US 3 576 364 dans le but d'obtenir, selon trois modes de réalisations proposés, un panneau publicitaire présentant un effet particulier. Dans un mode de réalisation, la diapositive est placée contre la face arrière de la cellule pour être observée du côté de la face avant par transparence, grâce à un fort éclairage de la face arrière. Il apparaît donc qu'un tel dispositif est encombrant, consomme beaucoup d'énergie et n'est en tout cas pas adapté à une utilisation dans une pièce d'horlogerie.

Dans le brevet FR 2 117 886, un dispositif à valve optique permet de révéler ou de masquer des images imprimées sur un film transparent interposé entre un miroir et ladite valve optique, lesdites images étant alors observées par transparence, c'est-à-dire par réflexion des rayons lumineux sur le miroir, ce qui rend la qualité de l'image perçue très dépendante de l'angle d'observation. De plus, les pertes d'intensité lumineuse par réflexion au niveau de chaque interface réduisent considérablement la luminosité de l'image observée.

Faisant aussi parti de l'art antérieur, le brevet GB 2 242 052, sur lequel est basé le preambule de la première revendication, décrit un dispositif d'affichage comprenant un motif décoratif placé sur dos d'une valve optique.

L'invention a pour but de remédier aux inconvénients de cet art antérieur en fournissant un dispositif qui permet de masquer ou de découvrir un motif décoratif coloré placé à l'arrière d'une valve optique en procurant, lorsque la valve optique est en mode de transmission, une image plus lumineuse et plus contrastée que celle obtenue avec les dispositifs connus, et notamment avec celui décrit dans le brevet FR 2 117 886. Le dispositif selon l'invention présente en outre l'avantage de pouvoir être construit par assemblage d'un plus petit nombre d'éléments, et donc avec un coût de production plus faible.

L'invention a aussi pour objet de fournir un dispositif qui ne nécessite qu'une faible consommation d'énergie pour permettre à l'observateur d'obtenir l'effet esthétique recherché.

A cet effet, l'invention a pour objet un dispositif d'affichage comprenant :
- un motif décoratif coloré,
- une valve optique présentant une face avant par laquelle le motif décoratif coloré est observé et une face arrière en regard de laquelle est placé un réflecteur diffuseur et contre laquelle est placé le motif décoratif coloré, ladite valve étant susceptible de passer d'un état opaque à un état transparent par l'application d'une tension électrique; et
- une source d'énergie pourvue d'un dispositif de commande agencé pour appliquer une tension électrique nécessaire au changement d'état de ladite valve optique. caractérisé en ce que ledit réflecteur est de type non lambertien et en ce que le motif décoratif coloré est formé par une encre imprimée directement sur ledit réflecteur-diffuseur, sans en modifier sensiblement l'aspect de surface.

L'effet esthétique du dispositif d'affichage selon l'invention résulte donc de l'effet conjugué du choix d'un réflecteur-diffuseur non lambertien et présentant une réflexion non spéculaire, mais ayant un lobe de diffusion beaucoup directif que celui d'un réflecteur-diffuseur lambertien, et de l'impression d'un motif décoratif coloré directement sur ledit réflecteur-diffuseur, en supprimant par là-même l'effet de parallaxe et les pertes de luminosité par réflexions qu'on avait, notamment en raison de l'épaisseur d'un support transparent, de type diapositive.

Différents types connus de valves optiques peuvent être utilisés, mais on choisira de préférence, en particulier pour l'application dans une pièce d'horlogerie, une cellule à cristal liquide en raison de sa consommation réduite en énergie. Dans les applications où la consommation d'énergie n'est pas un élément critique, par exemple dans une pendulette, on pourra également utiliser des cellules électrochromiques ou électrochimiques qui demandent beaucoup plus d'énergie pour passer d'un état à l'autre.

La cellule à cristaux liquides qu'on peut utiliser dans le dispositif selon l'invention peuvent être une quelconque cellule connue susceptible de passer d'un état non transparent à un état transparent lorsqu'on commute le champ électrique. Par exemple, on peut utiliser une cellule dite de "Heilmeier" comportant une couche de cristal liquide contenant un composé nématique à anisotropie diélectrique positive et un colorant pléochroïque choisi pour avoir un bon coefficient d'absorption de la lumière visible dans une longueur d'onde déterminée. Pour avoir un masquage du motif décoratif coloré le plus parfait possible, on utilisera avantageusement un colorant pléochroïque ayant un coefficient d'absorption élevé dans la plupart des longueurs d'onde, de sorte que la cellule ait une couleur sensiblement noire en absence de champ électrique. Un tel colorant est par exemple celui décrit dans le brevet DE-3 028 593.

En utilisant une cellule dite "Twist-nematic", comportant des polariseurs à axes parallèles, placés à l'avant et à l'arrière de la couche de cristal liquide, l'aspect de la cellule est uniformément sombre en absence de champ électrique. Un effet inverse est obtenu avec une cellule construite avec des polariseurs croisés. Quel que soit le type de cellule, les électrodes supportées par les faces internes des plaques transparentes, entre lesquelles se trouve la couche de cristaux liquides, sont transparentes au moins dans la zone où se trouve le décor.

Le réflecteur-diffuseur utilisé est formé par un film plastique métallisé possédant des caractéristiques optiques optimisées, c'est-à-dire des caractéristiques opposées à celles d'un réflecteur-diffuseur lambertien, qui diffuse la totalité de la lumière incidente dans toutes les directions. Un réflecteur-diffuseur particulièrement bien adapté au dispositif selon l'invention a un lobe de diffusion redressé pour lequel un taux de luminance de l'ordre de 50 % est obtenu dans la direction d'un rayon formant avec la normale au plan du réflecteur-diffuseur un angle compris entre 40 et 60°, de préférence 50°.

Les encres utilisées sont du type de celles utilisées en imprimerie de qualité, par exemple sur papier glacé non absorbant. Parmi tous les procédés connus d'impression, l'expérience a montré que l'héliographie était le procédé le mieux adapté à une production en petite série, et au dépôt d'une encre en une couche suffisamment mince pour ne pas modifier l'aspect de surface du réflecteur-diffuseur.

Lorsque le dispositif selon l'invention est incorporé dans une pièce d'horlogerie, la face de la cellule formant cadran peut également porter un décor ou des signes, tel que le nom du fabricant ou des repères d'indications horaires, sans sortir du cadre de l'invention. De même, lorsque le motif décoratif coloré n'occupe pas tout le cadran, la partie laissée libre peut être utilisée pour un affichage digital usuel par segments. Le cadran peut également être formé de plusieurs dispositifs selon l'invention juxtaposés. Dans le cas où la pièce d'horlogerie est pourvue d'un affichage analogique, on peut prévoir un passage pour les canons des aiguilles à travers la cellule et le réflecteur-diffuseur supportant le motif décoratif coloré.

Dans une pièce d'horlogerie, la commutation de la cellule d'un état dans un autre peut être effectuée par manipulation d'un organe de commande préexistant, telle que la couronne, ou au moyen d'un organe additionnel tel qu'un poussoir. Cette commutation peut également être effectuée à un instant prédéterminé par l'intermédiaire d'un signal reçu de la base de temps, telle qu'une heure d'alarme ou une date anniversaire.

Les caractéristiques et les avantages de l'invention seront mieux compris à la lecture de la description qui va suivre, donnée uniquement à titre d'exemple et faite en référence aux dessins annexés dans lesquels :
- La figure 1 est une vue de dessus d'une montre dans laquelle est incorporé le dispositif selon l'invention;
- la figure 2 est une vue en coupe schématique agrandie, selon la ligne II-II de la figure 1, la partie inférieure de la montre, comportant notamment le mouvement, n'étant pas représentée; et
- la figure 3 est la représentation dans un plan axial des lobes de diffusion d'un réflecteur-diffuseur optimisé selon l'invention et d'un réflecteur-diffuseur lambertien.

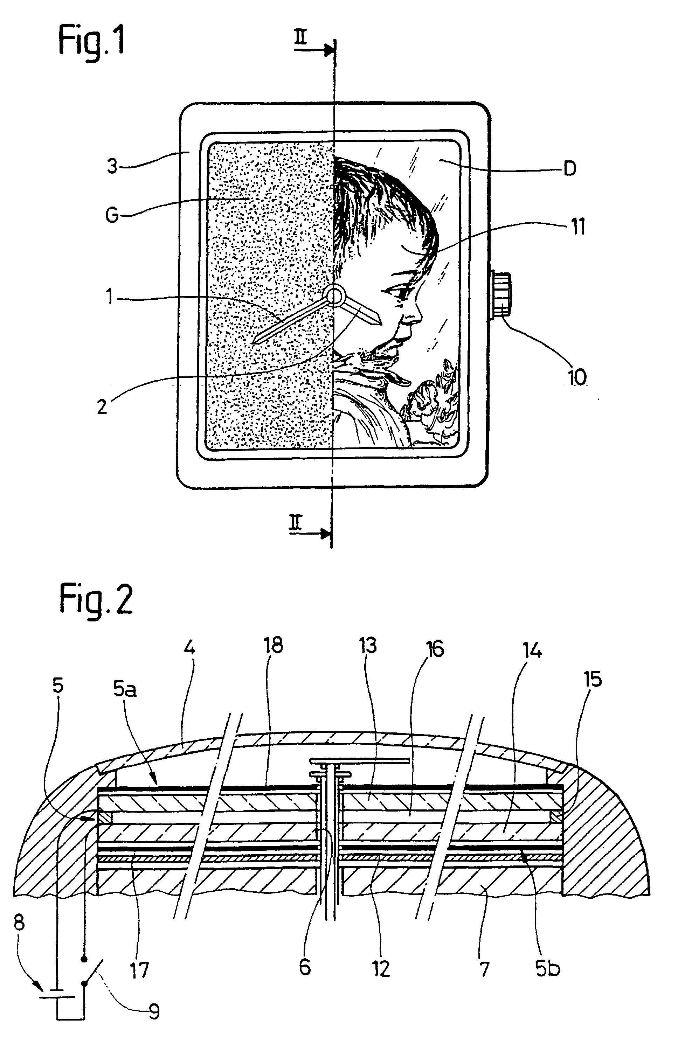

Selon l'exemple représenté aux figures 1 et 2, une montre à affichage analogique par aiguilles 1, 2, comporte un boîtier 3 fermé par un verre 4. Les aiguilles 1, 2 sont disposées au-dessus de la face avant 5a d'une cellule à cristaux liquides 5 qui forme le cadran de la montre et qui occupe toute la surface visible du cadran. La cellule 5 comporte en son centre un passage 6 pour les canons des aiguilles depuis l'espace compris entre le verre 4 et la face avant de la cellule 5 jusqu'au mouvement 7, qui n'est que partiellement représenté. La montre comporte en outre une source d'énergie 8, qui peut être connectée à la cellule 5 par l'intermédiaire d'un circuit de commande symbolisé par l'interrupteur 9. Ce circuit de commande est par exemple activé par la couronne 10 sur laquelle on peut exercer des pressions successives pour faire changer l'état de la cellule à cristal liquide 5. Bien entendu, les éléments schématisés peuvent être réalisés par tout moyen approprié. Ainsi, l'organe de manoeuvre permettant d'agir sur le circuit de commande peut également être un dispositif à éléments photosensibles, capacitifs ou piézoélectriques. La source d'énergie peut être quelconque, mais elle est de préférence constituée par la pile de la pièce d'horlogerie. Le motif décoratif coloré 11, imprimé sur le réflecteur-diffuseur 12 est intercalé entre la face arrière 5b de la cellule 5 et la face supérieure du mouvement 7.

Sur la figure 1, la moitié gauche G de la montre représente l'aspect du cadran lorsque la cellule à cristaux liquides 5 est opaque, et la moitié droite D représente l'aspect du cadran lorsque la cellule est transparente et laisse apparaître le motif décoratif coloré 11.

Dans la coupe représentée à la figure 2, la cellule 5 donnée à titre d'exemple est du type "Twist-nematic". Pour une meilleure compréhension, les épaisseurs des composants du dispositif ont été considérablement exagérées, la cellule complète ayant en réalité une épaisseur totale de l'ordre de 0,9 mm. Une telle cellule comporte une plaque avant transparente 13, une plaque arrière transparente 14, un cadre de scellement 15 délimitant, en coopération avec les plaques 13 et 14, un espace fermé 16 dans lequel se trouve une couche de cristal liquide nématique à anisotropie diélectrique positive. Un tel cristal liquide est par exemple celui disponible auprès de la société Merk sous la référence ZLI-4469-000. Les faces en regard des plaques 13 et 14 comportent chacune, sur toute leur surface, une électrode transparente (non représentée) de type connu, tel qu'une mince couche d'oxyde mixte d'étain et d'indium (ITO). La cellule 5 comporte en outre sur la face externe de la plaque 13 orientée vers le verre 4, un premier polariseur 17 et sur la face externe de la plaque 14 orientée vers le mouvement 7 un deuxième polariseur 18, les deux polariseurs 17, 18 ayant leurs axes parallèles. Un motif décoratif coloré 11 imprimé sur le réflecteur-diffuseur 12 est intercalé entre le deuxième polariseur 18 et la face avant du mouvement 7.

Le motif décoratif coloré 11 est obtenu selon les techniques bien connues pour l'impression. Les encres d'impression sont choisies de type "surpigmenté" avec un solvant permettant d'obtenir à faible épaisseur une saturation de couleur. Compte tenu des dimensions relativement faibles du motif décoratif coloré utile dans une application horlogère, on utilisera avantageusement la technique d'impression par lot, en utilisant la méthode d'impression héliographique.

Selon une caractéristique essentielle de l'invention les encres servant à créer le motif décoratif sont appliquées sur le réflecteur-diffuseur avec une épaisseur suffisamment faible pour ne pas modifier son état de surface, et par conséquence ses propriétés optiques. Des mesures effectuées sur un motif décoratif-test comportant les couleurs rouge, jaune, vert, bleu et gris, séparées par des zones de réflecteur-diffuseur nu, en utilisant un comparateur électronique à balayage (Talystep I disponible chez Taylor Hobson - USA) ont montré qu'une épaisseur comprise entre 20 et 50 nm contribuait seulement à augmenter l'amplitude des pics de rugosité de la surface, sans en modifier statistiquement la répartition et la fréquence. La conservation des propriétés optiques est confirmée par des mesures de lobes de diffusion, comme indiqué ci-après.

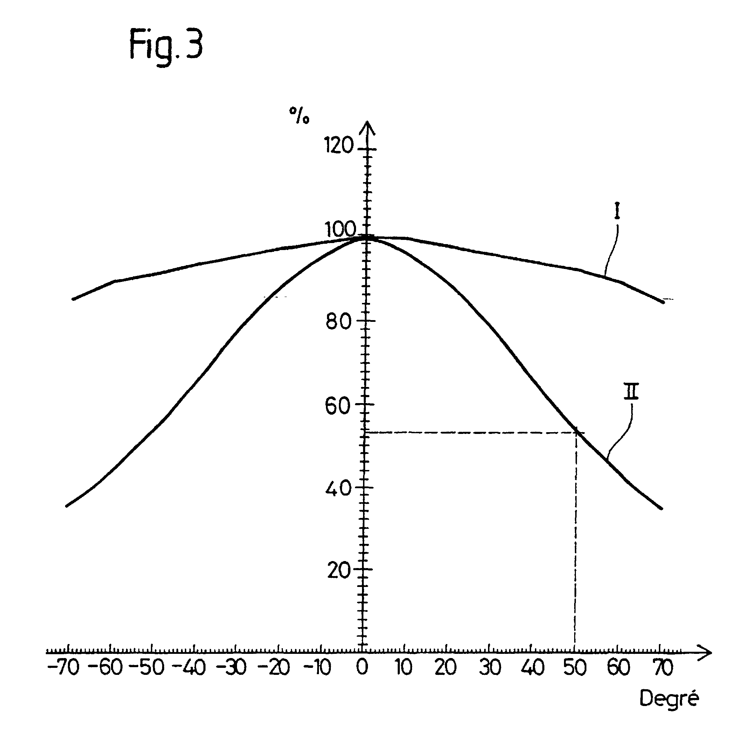

Les lobes de diffusion présentant une enveloppe sensiblement de révolution autour d'un axe normal au plan du réflecteur-diffuseur, la figure 3 représente, dans un plan axial, la variation du taux de luminance exprimée en pourcentage relatif, en fonction de l'angle d'observation mesuré par rapport à la normale. La courbe I de référence a été réalisée avec un réflecteur-diffuseur lambertien formé par un substrat ayant BaSO₄ comme revêtement, et la courbe II avec un réflecteur-diffuseur optimisé selon l'invention ne comportant aucune encre à sa surface. Les intensités lumineuses absolues du réflecteur-diffuseur autour de la position 0° dépassent largement les intensités d'un diffuseur lambertien, mais pour les angles plus élevés les intensités du diffuseur lambertien dépassent celles du réflecteur-diffuseur, c'est à dire que le réflecteur-diffuseur utilisé dans le cadre de la présente invention concentre la lumière dans un cône autour de la position 0°. Un réflecteur-diffuseur correspondant à la courbe II est par exemple constitué par une feuille plastique métallisée produite chez Sanritzu Corporation, Shimotsuga Gun-Tochigi (Japon) sous la référence WNA.

De la même façon, on a enregistré les courbes de lobes de diffusion pour un réflecteur-diffuseur optimisé ayant à sa surface des encres de couleur rouge, jaune, vert, bleu et gris. Dans le tableau ci-après, on a rapporté les valeurs des angles pour lesquels on observe une diminution des taux de luminance à 80% et 60% relativement au maximum pour une observation sous incidence normale

| | Taux luminance | | |
|---|---|---|---|
| | 100% | 80% | 60% |
| Réflecteur rouge | 0° | 36° | 71° |
| Réflecteur jaune | 0° | 34° | 60° |
| Réflecteur vert | 0° | 28° | 51° |
| Réflecteur bleu | 0° | 27° | 48° |
| Réflecteur gris | 0° | 31° | 53° |
| Réflecteur nu | 0° | 29° | 45° |

Il ressort de ce tableau que, pour un taux de luminance de 80%, on a une valeur angulaire moyenne de 30,83° avec un écart type de 3,54°, et pour 60% une valeur angulaire moyenne de 54,67° avec un écart type de 9,48°, ce qui montre que les lobes de diffusion de ces cinq couleurs présentent une dispersion relativement faible autour du lobe de diffusion du réflecteur-diffuseur nu optimisé. On observera également, en se référant à la figure 3 qu'une diminution à 80% du taux de luminance pour un réflecteur diffuseur lambertien correspond un angle d'observation de 75°, alors qu'une même diminution à 80% est observée sous un angle deux fois plus faible avec un réflecteur-diffuseur optimisé selon l'invention, revêtu ou non d'une encre colorée. Cela établit clairement le caractère surprenant de l'invention sur la concentration de la lumière réfléchie, et donc sur la grande luminosité du motif coloré.

Dans l'exemple qui vient d'être décrit, en l'absence de champ électrique, le cristal liquide a une structure planaire twistée, qui absorbe les deux composantes de la lumière de sorte que la surface de la cellule 5 tournée vers le verre 4 présente une surface uniformément sombre et masque le motif décoratif coloré 11. Lorsqu'une tension est appliquée, par l'intermédiaire de l'interrupteur 9, le cristal liquide va commuter et laisser passer la lumière et rendre le motif 11 visible. L'effet inverse serait obtenu si les polariseurs 17, 18, avaient leurs axes croisés. De même, sans sortir du cadre de l'invention l'homme du métier peut utiliser d'autres types de cellules et d'autres types de cristaux liquides associés ou non à des molécules dichroïques ou pléochroïque.

Il est à noter que l'interrupteur 9 symbolise tout moyen permettant d'appliquer à la cellule 5 une tension de commande. Dans le cadre d'une pièce d'horlogerie, cet interrupteur peut être un transistor de commutation incorporé dans le circuit intégré du mouvement 7. Un tel transistor peut être commandé à son tour par divers paramètres liés au temps. Par exemple, le transistor peut être commandé périodiquement à partir de la base de temps du mouvement, par un signal basé sur l'alarme si le mouvement en est équipé. L'exemple qui vient d'être décrit est susceptible de nombreuses variations et adaptations à la portée de l'homme de métier sans sortir du cadre de l'invention.

## Revendications

1. Dispositif d'affichage comprenant :
- un motif décoratif coloré (11);
- une valve optique (5) présentant une face avant (5a) par laquelle le motif décoratif coloré (11) est 5 observé et une face arrière (5b) en regard de laquelle est disposé un réflecteur-diffuseur (12), et contre laquelle est placé le motif décoratif coloré (11) ladite valve étant susceptible de passer d'un état opaque à un état transparent par application d'une tension électrique, et
- une source d'énergie (8) pourvue d'un dispositif de commande (9) agencé pour appliquer la tension électrique nécessaire au changement d'état de ladite valve optique (5);
**caractérisé en ce que** ledit réflecteur-diffuseur (12) est un film plastique métallisé de type non lambertien ayant un lobe de diffusion faisant avec la direction normale à son plan un angle compris entre 40 et 60°, de préférence 50° lorsque le taux de luminance est de 50 % et **en ce que** le motif décoratif coloré (11) est formé par une encre imprimée directement sur ledit réflecteur-diffuseur (12) sans en modifier sensiblement l'état de surface.

2. Dispositif d'affichage selon la revendication 1, **caractérisé en ce que** le motif décoratif coloré (11) comporte également des zones non revêtues d'une encre.

3. Dispositif selon la revendication 1, **caractérisé en ce que** la valve optique (5) est une cellule à cristal liquide.

4. Dispositif selon la revendication 3, **caractérisé en ce que** la cellule à cristal liquide est de type "Twist-nematic" à polariseurs parallèles.

5. Pièce d'horlogerie comportant au moins un mouvement (7) destiné à afficher l'heure sur un cadran, ledit mouvement (7) étant contenu dans un boîtier (3) fermé par un verre (4), **caractérisée en ce que** le cadran de ladite pièce d'horlogerie constitue en tout ou en partie le dispositif d'affichage selon la revendication 1.

6. Pièce d'horlogerie selon la revendication 5, **caractérisée en ce que** la commutation de la source d'énergie (8) est effectuée au moyen d'un organe de commande extérieur.

7. Pièce d'horlogerie selon la revendication 5, **caractérisée en ce que** la commutation de la source d'énergie (8) est effectuée par l'intermédiaire d'un signal émis par la base de temps de ladite pièce d'horlogerie.

8. Pièce d'horlogerie selon la revendication 5, **caractérisée en ce que** le dispositif formant le cadran est en outre pourvu d'un passage (6) pour les canons des aiguilles (1,2).

9. Pièce d'horlogerie selon la revendication 5, **caractérisée en ce que** la face avant (5a) du dispositif formant cadran est en outre pourvu d'un décor ou de signes.

## Claims

1. Display device comprising :
- a coloured decorative design (11),
- an optical shutter (5) having a front face (5a) through which the decorative design (11) is observed and a back face (5b) facing which is placed a diffuse reflector (12) and against which the coloured decorative design (11) is placed, said shutter being capable of passing from an opaque state to a transparent state by application of an electric voltage thereto; and
- an power source (8) provided with a control device (9) arranged for applying the electric voltage necessary for the change of state of said optical shutter (5),
**characterised in that** said diffuse reflector (12) is a metal-plated plastic sheet not of the lambertian type having a diffusion lobe forming, with the direction perpendicular to its plane, an angle of between 40° and 60°, preferably 50° when the luminance is 50% and **in that** the coloured decorative design (11) is formed by an ink directly printed onto said diffuse reflector (12), without appreciably modifying the surface-finish.

2. Display device according to claim 1, **characterised in that** the coloured decorative design (11) also comprises zones which are not coated with an ink.

3. Display device according to claim 1, **characterised in that** the optical shutter (5) is a liquid crystal cell.

4. Device according to claim 3, **characterised in that** the liquid crystal cell is of the "Twisted-nematic" type and comprises parallel polarisers.

5. Timepiece comprising at least one movement (7) intended to display the time in connection with a dial, said movement (7) being housed in a case (3) closed by a crystal (4), **characterised in that** the dial of said timepiece constitutes wholly or partly the display device according to claim 1.

6. Timepiece according to claim 5, **characterised in that** the switching of the power source (8) is effected by means of an external control element.

7. Timepiece according to claim 5, **characterised in that** the switching of the power source (8) is effected via a signal transmitted by the time base of said timepiece.

8. Timepiece according to claim 5, **characterised in that** the device forming the dial is further provided with a passage for the pipes carrying the hands (1, 2).

9. Timepiece according to claim 6, **characterised in that** the front face (5a) of the dial forming device is further provided with a decoration or with signs.

## Patentansprüche

1. Anzeigevorrichtung, die umfaßt:
- ein farbiges verzierendes Motiv (11);
- ein optisches Ventil (5), das eine vordere Fläche (5a), durch die das farbige verzierende Motiv (11) beobachtet wird, und eine hintere Fläche (5b), gegenüber der ein Reflektor-Diffusor (12) angeordnet ist und an der das farbige verzierende Motiv (11) angeordnet ist, aufweist, wobei das Ventil von einem undurchsichtigen Zustand in einen durchsichtigen Zustand übergehen kann, indem eine elektrische Spannung angelegt wird, und
- eine Energiequelle (8), die-mit einer Steuervorrichtung (9) versehen ist, die so beschaffen ist, daß sie die elektrische Spannung, die für die Änderung des Zustandes des optischen Ventils (5) notwendig ist, anlegen kann;
**dadurch gekennzeichnet, daß** der Reflektor-Diffusor (12) ein mit Metall beschichteter Kunststoffilm des nicht-lambertschen Typs ist, der eine Diffusionskeule besitzt, die mit der Normale seiner Ebene einen Winkel im Bereich von 40 bis 60°, vorzugsweise 50°, wenn der Helligkeitsanteil 50 % beträgt, bildet, und daß das farbige verzierende Motiv (11) durch eine Druckfarbe gebildet ist, die ohne wesentliche Modifikation des Zustands der Oberfläche direkt auf den Reflektor-Diffusor (12) gedruckt ist.

2. Anzeigevorrichtung nach Anspruch 1, **dadurch gekennzeichnet, daß** das farbige verzierende Motiv (11) außerdem nicht mit Farbe beschichtete Zonen aufweist.

3. Vorrichtung nach Anspruch 1, **dadurch gekennzeichnet, daß** das optische Ventil (5) eine Flüssigkristallzelle ist.

4. Vorrichtung nach Anspruch 3, **dadurch gekennzeichnet, daß** die Flüssigkristallzelle vom "twist-nematic"-Typ mit parallelen Polarisatoren ist.

5. Zeitmeßgerät, das wenigstens ein Uhrwerk (7) umfaßt, das dazu bestimmt ist, auf dem Zifferblatt die Zeit anzuzeigen, wobei das Uhrwerk (7) in einem von einem Glas (4) verschlossenen Gehäuse (3) enthalten ist, **dadurch gekennzeichnet, daß** das Zifferblatt des Zeitmeßgeräts ganz oder teilweise durch die Anzeigevorrichtung nach Anspruch 1 gebildet ist.

6. Zeitmeßgerät nach Anspruch 5, **dadurch gekennzeichnet, daß** das Umschalten der Energiequelle (8) durch ein äußeres Stellorgan erfolgt.

7. Zeitmeßgerät nach Anspruch 5, **dadurch gekennzeichnet, daß** das Umschalten der Energiequelle (8) über ein Signal erfolgt, das von der Zeitbasis des Zeitmeßgeräts ausgesendet wird.

8. Zeitmeßgerät nach Anspruch 5, **dadurch gekennzeichnet, daß** die das Zifferblatt bildende Vorrichtung außerdem mit einem Durchlaß (6) für die Stifte der Zeiger (1, 2) versehen ist.

9. Zeitmeßgerät nach Anspruch 5, **dadurch gekennzeichnet, daß** die vordere Fläche (5a) der das Zifferblatt bildenden Vorrichtung außerdem mit einer Verzierung oder mit Zeichen versehen ist.
